# EUROPÄISCHE PATENTANMELDUNG

(11) **EP 2 962 961 A1**
(43) Veröffentlichungstag der Anmeldung: **06.01.2016**
(21) Anmeldenummer: 15001339.9
(22) Anmeldetag: 06.05.2015
(51) Int. Cl.: B65G 1/02, A47B 47/04, A47B 57/12, F16B 12/46, F16B 12/12

(54) **HOCHREGAL FÜR EIN HOCHREGALLAGER**

(30) Priorität: 30.06.2014 AT 5162014
(71) Anmelder: Kaufmann Bausysteme GmbH, 6870 Reuthe (AT)
(72) Erfinder: Kaufmann, Anton, 6870 Reuthe (AT)
(74) Vertreter: Fechner, Thomas

(57) **Zusammenfassung**

Hochregal (1) für ein Hochregallager (2), insbesondere zur Lagerung einer Vielzahl von Paletten, wobei das Hochregal (1) vertikal stehende Steher (3) aus Holz und/oder Holz-Verbundwerkstoff und die Steher (3) in Horizontalrichtung (4) miteinander verbindende Längsträger (5) aufweist, wobei die Steher (3) jeweils zumindest zwei in Vertikalrichtung (6) verlaufende, voneinander beabstandete Stützen (7) aufweisen, wobei die den jeweiligen Steher (3) bildenden Stützen (7) mittels Querträgern (8) des jeweiligen Stehers (3) miteinander verbunden sind. (Fig. 2)

## Beschreibung

Die vorliegende Erfindung betrifft ein Hochregal für ein Hochregallager, insbesondere zur Lagerung einer Vielzahl von Paletten, wobei das Hochregal vertikal stehende Steher aus Holz und/oder Holz-Verbundwerkstoff und die Steher in Horizontalrichtung miteinander verbindende Längsträger aufweist. Weiters betrifft die Erfindung auch ein Hochregallager mit einer Vielzahl von Hochregalen.

Als Hochregallager werden beim Stand der Technik Lager mit Regalen, meist ab einer Höhe von 12 m bezeichnet. Heutzutage werden Maximalhöhen bis ca. 50 m erreicht. Die Kapazität von Hochregallagern reicht von wenigen 1.000 Palettenstellplätzen bis zu mehreren 100.000 solcher Stellplätze, wobei in Hochregallagern üblicherweise auf Paletten angeordnete Güter eingelagert werden. Hochregallager sind aber natürlich nicht zwingend an Paletten gebunden. Hochregallager stellen Lagersysteme dar, welche einerseits einen hohen Grad der Raumnutzung realisieren und andererseits aber auch mit nicht zu verachtenden Investitionskosten verbunden sind. Meist werden Hochregallager mit einem vollautomatisierten System zur Lagerverwaltung bewirtschaftet. Die Paletten bzw. Waren können innerhalb des Hochregallagers von Regalbediengeräten und/oder auch Gabelstaplern befördert werden.

Hochregallager werden heutzutage überwiegend als Stahlkonstruktionen errichtet. Es gibt aber bereits auch einzelne Hochregallager mit Hochregalen aus Holz. Gattungsgemäße Hochregale sehen vertikal stehende Steher aus Holz und/oder Holzverbundstoff vor. Der Steher ist beim Stand der Technik aus Brettschichtholz durchgängig als ein massives in sich geschlossenes Bauteil gefertigt. Diese Bauweise hat den Nachteil, dass sehr viel Rohstoff in ein Hochregal eingebaut wird.

Aufgabe der Erfindung ist es, einen Vorschlag zu machen, wie gattungsgemäße Hochregale günstiger aber trotzdem mit ausreichender Stabilität hergestellt werden können.

Erfindungsgemäß ist hierfür vorgesehen, dass die Steher jeweils zumindest zwei in Vertikalrichtung verlaufende, voneinander beabstandete Stützen aufweisen, wobei die den jeweiligen Steher bildenden Stützen mittels Querträgern des jeweiligen Stehers miteinander verbunden sind.

Die Steher werden somit gemäß der Erfindung in einer fachwerkartigen Ausgestaltungsform aus in Vertikalrichtung verlaufenden und voneinander beabstandeten Stützen, welche mittels Querträger miteinander verbunden sind, ausgebildet. Überraschenderweise hat sich gezeigt, dass durch die erfindungsgemäße Ausbildung der Steher aus Stützen und Querträgern mit relativ wenig Material und damit relativ kostengünstig sehr stabile Steher für das Hochregal hergestellt werden können.

Die Querträger verlaufen vorzugsweise horizontal. Die Stützen sind bevorzugt parallel zueinander ausgerichtet. Auch die Querträger sind bevorzugt parallel zueinander ausgerichtet. Erfindungsgemäß ausgebildete Hochregale können z.B. zur Lagerung von auf Paletten, insbesondere Europaletten, abgelegten Gütern und Waren eingesetzt werden. Die Querträger verlaufen in einer Draufsicht bevorzugt orthogonal zu den Längsträgern. Die Längsträger wie auch die Querträger verlaufen, jeweils in einer entsprechenden Seitenansicht gesehen, günstigerweise orthogonal zu den Stützen. Die Stützen und die Querträger bilden zusammen die Steher. Die Steher werden in Längsrichtung des Hochregals mittels der Längsträger miteinander verbunden. Die Stützen schließen zusammen mit den Querträgern bevorzugt Öffnungen in den Stehern ein. Die Querträger sind vorzugsweise mittels formschlüssigem Ineinandergreifen mit den Stützen verbunden, um so die Steher auszubilden. Vorzugsweise erfolgt die Verbindung der Querträger mit den Stützen über Keilzinkung. Bei Keilzinkung zur Befestigung der Querträger an den Stützen beträgt die Eindringtiefe der Keilzinken ineinander günstigerweise zumindest 50 mm. Bei einer Verbindung mittels Keilzinkung werden die miteinander verbundenen Teile mittels Kraft-, Form- und Stoffschluss aneinander festgehalten. Die Keilzinken stecken formschlüssig ineinander. Der Kraftschluss entsteht zwischen den Keilflächen der Keilzinken, wenn letztere beim Zusammenfügen elastisch komprimiert werden. Die elastischen Reaktionskräfte sind bei genügend kleinem Flankenwinkel der Keilzinken groß genug, um mittels Selbsthemmung ein Auseinanderrutschen der Keilzinken zu verhindern. Formschluss entsteht zusätzlich durch Aneinanderstoßen der entsprechenden Bereiche der Keilzinken. Es ist zusätzlich auch noch ein stoffschlüssiges Verbinden vorgesehen, indem man die Keilzinken zusätzlich verleimt, verklebt oder dergleichen. Es kann sich um Keil-Schaft-Verklebung, Kamm-Verklebung, Kammprofil-Verklebung, Keilzahn-Verklebung, Keilprofil-Verklebung und Keil-Buche-Schaft-Verklebung handeln, nur um einige Beispiele zu nennen. Bei den bevorzugten Ausgestaltungsformen von Querträger und Stützen wird auf zusätzliche Verbindungsmittel wie z.B. Verschraubungen oder zusätzliche Verstrebungen verzichtet. Es wird eine besonders kostengünstige aber trotzdem stabile Konstruktion der Steher erreicht.

Bei erfindungsgemäßen Hochregallagern ist bevorzugt vorgesehen, dass die Stützen und/oder die Längsträger und/oder die Querträger aus Holz und/oder Holzverbundwerkstoff bestehen oder dies zumindest aufweisen. Bei den Holzverbundwerkstoffen handelt es sich besonders bevorzugt um Schichthölzer, bei denen einzelne Holzschichten miteinander verleimt sind. Solche Schichthölzer können so aufgebaut sein, dass die Fasern in allen miteinander verleimten Schichten im Wesentlichen parallel zueinander laufen. Es können aber auch Schichten mit quer verlaufen Fasern mit eingelegt sein. In diesen Schichten sind die Fasern dann bevorzugt orthogonal bzw. zumindest quer zu den Fasern in anderen Schichten des Furnierschichtholzes ausgerichtet. Dies ist an sich bekannt. Besonders bevorzugt ist vorgesehen, dass die Stützen und/oder die Querträger und/oder die Längsträger aus Buchenfurnierschichtholz bestehen oder dieses zumindest aufweisen. Hiermit können besonders hohe Festigkeiten mit relativ geringem Materialaufwand realisiert werden. Die charakteristische Zugfestigkeit f_{t,0,k} der verwendeten Hölzer bzw. Holzverbundwerkstoffe beträgt nach allgemeiner bauaufsichtlicher Zulassung Z-9.1-838 günstigerweise zumindest 77 N/mm² (Newton pro Quadratmillimeter).

Der Vollständigkeit halber wird darauf hingewiesen, dass unter Holz im Wesentlichen Massivholz zu verstehen ist, welches direkt aus dem Baum herausgesägt wird. Holzverbundwerkstoffe sind aus oder zumindest unter Verwendung von Holz hergestellte Verbundkörper. Es kann sich dabei um die bereits genannten Schichthölzer, aber auch um andere Verbundwerkstoffe, auch unter Einbeziehung anderer Werkstoffe als Holz, handeln. Als Beispiele für die genannten anderen Werkstoffe sind Leim, Kleber und/oder auch Armierungen z.B. aus Faserwerkstoffen, Metall und/oder Kunststoff zu nennen. Der Holzanteil der Holzverbundwerkstoffe beträgt aber günstigerweise zumindest 90%, vorzugsweise zumindest 95%, Gewichtsanteil.

Da es sich bei den erfindungsgemäßen Regalen nicht um beliebige Regale sondern um Hochregale handelt, ist günstigerweise vorgesehen, dass die Steher, vorzugsweise die Stützen der Steher, eine vertikale Erstreckung von zumindest 12 m aufweisen. Die Stützen der Steher können aus in Vertikalrichtung übereinander angeordneten und miteinander verbundenen Stützenteilen zusammengebaut sein. Das Zusammenbauen der Stützenteile kann z.B. mittels Überplattung und Verschraubung erfolgen.

Die Längsträger der Hochregale bilden günstigerweise Ablageflächen für in dem Hochregal abgestellte oder abzustellende Paletten oder sonstige Waren. In diesem Fall können die Längsträger auch als Palettenträger bezeichnet werden.

Neben dem Hochregal an sich betrifft die Erfindung, wie eingangs bereits angedeutet, auch ein Hochregallager mit einer Vielzahl von Hochregalen gemäß der Erfindung. Die Hochregale sind in dem Hochregallager bevorzugt so angeordnet, dass ihre Längsträger parallel zueinander verlaufen. Zwischen den Hochregalen sind bevorzugt Gassen angeordnet. Diese Gassen sind vorzugsweise mittels Förderanlagen und/oder Gabelstaplern befahrbar, um die Paletten und/oder sonstigen Waren in das jeweilige Hochregal einsortieren und aus diesem auch wieder entnehmen zu können. Erfindungsgemäße Hochregallager sind in bevorzugten Ausgestaltungsformen als selbststehendes Gebäude ausgeführt. In diesem Zusammenhang ist bevorzugt vorgesehen, dass das Hochregallager ein Gebäude ist, bei dem ein Dach des Gebäudes und/oder Außenwände des Gebäudes von den Hochregalen des Hochregallagers getragen ist, bzw. sind. In diesen Ausgestaltungsformen nehmen die erfindungsgemäß ausgebildeten Steher der Hochregale also nicht nur die Lasten der sich im Hochregal befindlichen Paletten und/oder Waren sondern auch die Dachlast und die Last der Außenwände sowie witterungsbedingte Zusatzlasten durch Wind, Regen, Schnee etc. auf.

Weitere Merkmale und Einzelheiten bevorzugter Ausgestaltungsformen der Erfindung werden nachfolgend anhand von ausgewählten Ausführungsbeispielen erläutert. Es handelt sich um schematisierte Darstellungen, welche Folgendes zeigen:
Fig. 1 einen Ausschnitt eines in Form eines Gebäudes ausgebildeten Hochregallagers gemäß der Erfindung;
Fig. 2 einen Ausschnitt aus einem Hochregal des Hochregallagers aus Fig. 1 in einer perspektivischen Darstellung;
Fig. 3 einen Steher eines Hochregals gemäß Fig. 2 in einer Seitenansicht;
Fig. 4 eine Seitenansicht auf die stirnseitigen Steher zweier nebeneinander angeordneter Hochregale des Hochregallagers aus Fig. 1 mit einer dazwischen angeordneten Gasse;
Fig. 5 bis 7 Detaildarstellungen zur Verbindung von Stützenteilen der Stützen mittels Überplattung und Verschraubung;
Fig. 8 und 9 Detaildarstellungen zur Verbindung der Längsträger mit den Querträgern und
Fig. 10 bis 14 Detaildarstellungen zur Verbindung der Querträger mit den Stützen mittels Keilzinkung.

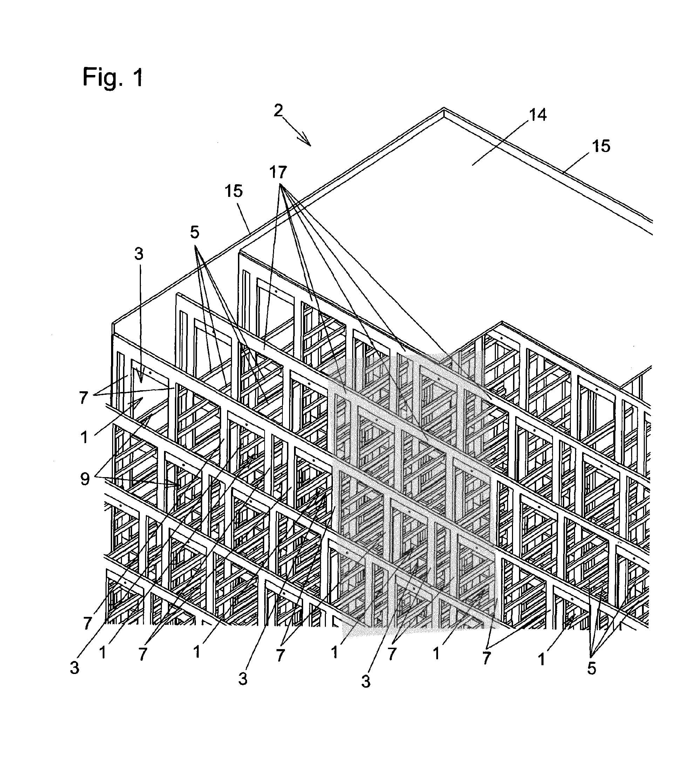

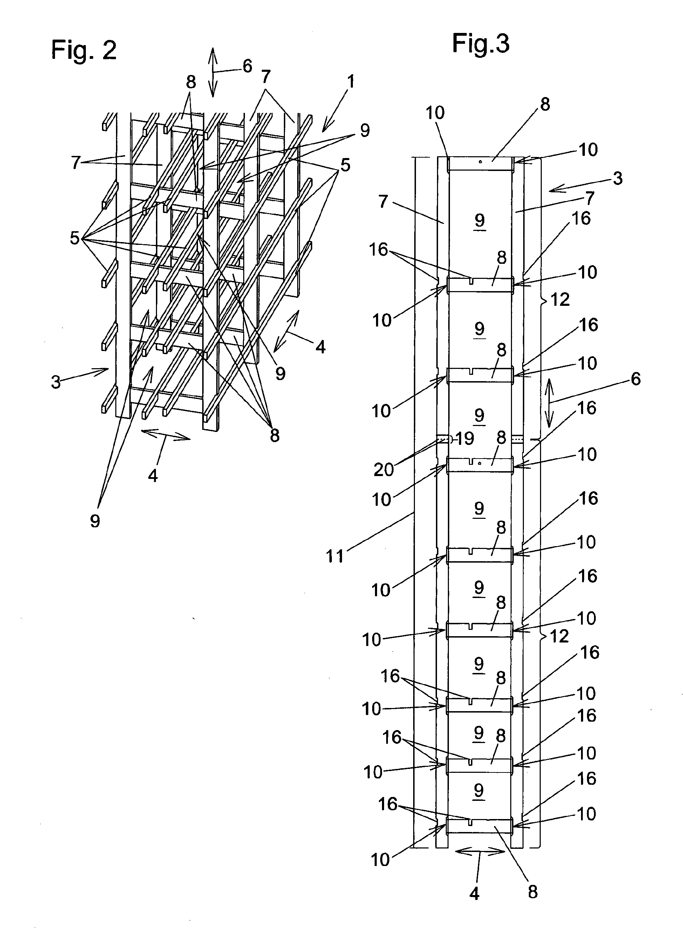

In Fig. 1 ist schematisiert ein Ausschnitt eines erfindungsgemäßen Hochregallagers 2, welches in Form eines selbststehenden Gebäudes ausgebildet ist, dargestellt. Das Dach 14 und die Außenwände 15 werden von den Stehern 3 der erfindungsgemäßen Hochregale 1 mit getragen. Die Steher 3 eines Hochregals sind mittels der Längsträger 5 miteinander verbunden. Die nebeneinander angeordneten Hochregale 1 des Hochregallagers 2 sind im gezeigten Ausführungsbeispiel zusätzlich mittels der Dachträger 17 miteinander verbunden. Jeder Steher 3 wird erfindungsgemäß aus jeweils zwei in Vertikalrichtung 6 verlaufenden, voneinander beabstandeten Stützen 7 und diese Stützen 7 des jeweiligen Stehers 3 miteinander verbindenden Querträgern 8 gebildet, wie dies anhand der Fig. 2 und 3 weiter unten im Detail erläutert wird. Bei dieser fachwerkartigen Ausbildung der Steher 3 weisen die Steher 3 Öffnungen 9 auf. Auf zusätzliche Stabilisierungsmittel wie Verschraubungen und/oder Verstrebungen und/oder dergleichen kann bei dieser Konstruktion zur Ausbildung der Steher 3 verzichtet werden.

Der Vollständigkeit halber wird natürlich darauf hingewiesen, dass erfindungsgemäße Hochregallager 2 nicht immer zwangsweise als ein selbststehendes Gebäude ausgebildet sein müssen. Es kann sich auch um Hochregallager 2 handeln, welche in ein bestehendes Gebäude eingebaut werden. Im zuletzt genannten Fall tragen die Steher 3 in der Regel abweichend vom hier gezeigten Ausführungsbeispiel dann weder das Dach 14 noch die Außenwand 15.

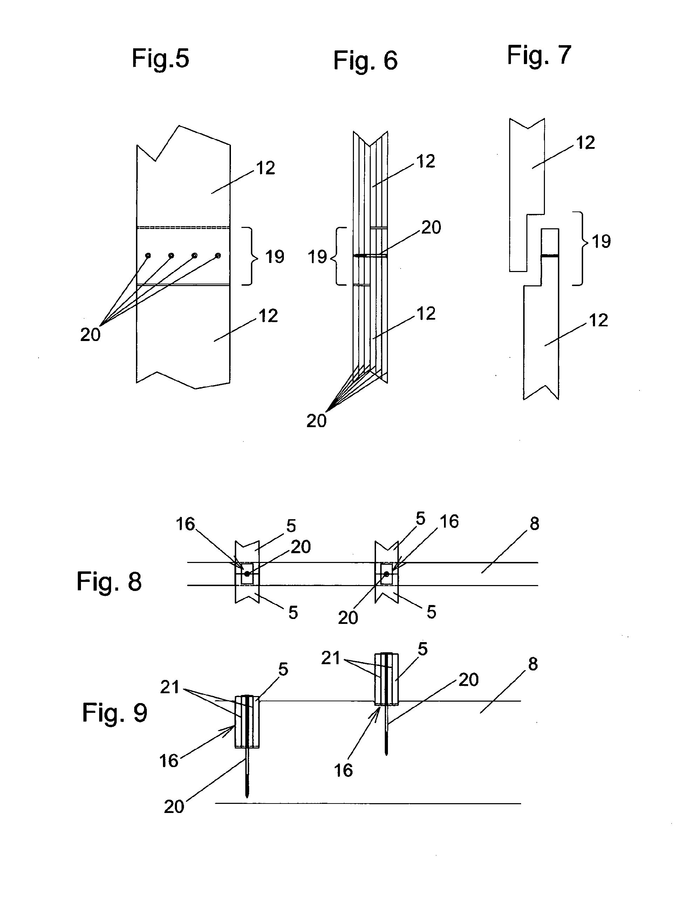

Fig. 2 zeigt eine perspektivische Ansicht auf einen Ausschnitt eines erfindungsgemäßen Hochregals 1, wie es in dem Hochregallager 2 gemäß Fig. 1 in einer Vielzahl zum Einsatz kommen kann. Die Steher 3 werden jeweils durch zwei oder mehr voneinander distanziert stehende Stützen 7, welche in Vertikalrichtung 6 verlaufen, gebildet, indem diese Stützen 7 von mehreren Querträgern 8 des jeweiligen Stehers 3 miteinander verbunden. Die Querträger 8 verlaufen, wie hier gezeigt, bevorzugt in einer Horizontalrichtung 4. Die so ausgebildeten Steher 3 des Hochregals 1 sind hintereinander angeordnet und mittels der Längsträger 5 miteinander verbunden. Die Längsträger 5 bzw. Palettenträger verlaufen günstigerweise ebenfalls in einer Horizontalrichtung und bilden in bevorzugten Ausgestaltungsformen die Ablageflächen für mit Waren 24 beladene Paletten 23 oder sonstige Waren 24. Zur Befestigung der Längsträger 5 an den Querträgern 8 bzw. den Stützen 7 sind die in Fig. 3 gut sichtbaren Ausnehmungen 16 vorgesehen. Diese sind so dimensioniert, dass die Längsträger 5 in der entsprechenden Ausrichtung genau hineinpassen. Durch den fachwerkartigen Aufbau, bei dem hier Öffnungen 9 zwischen den Querträgern 8 und den Stützen 7 der Steher 3 ausgebildet sind, ist eine sehr stabile Konstruktion erreicht, ohne dass hierfür sehr viel Material zur Ausbildung der Steher 3 benötigt wird. Die Verbindung der Querträger 8 mit den Stützen 7 erfolgt günstigerweise über Keilzinkungen 10. Hierdurch wird ein so stabiler Verbund erreicht, dass auf zusätzliche Verschraubungen und Querstreben oder dergleichen vor allem auch innerhalb des Stehers 3 verzichtet werden kann. Dies ist besonders gut in der Ansicht gemäß Fig. 3 auf einen Steher 3 des Hochregals 1 zu sehen. Die Vertikalerstreckung 11 des Stehers 3 beträgt bei Hochregalen 1 günstigerweise zumindest 12 m, kann aber auch mehrere Zehnermeter erreichen. Bei so langen Stehern 3 bzw. Stützen 7 können die Stützen, wie eingangs bereits erläutert, aus in Vertikalrichtung 6 übereinander angeordneten und miteinander verbundenen Stützenteilen 12 zusammengesetzt sein. Das Zusammensetzen erfolgt günstigerweise mittels der Überplattungen 19 und Verschraubungen 20, wie dies in Fig. 3 beispielhaft gezeigt und in den Fig. 5 bis 7 im Detail dargestellt ist. Fig. 5 zeigt eine Frontalansicht auf zwei in Vertikalrichtung 6 miteinander verbundene Stützenteile 12, Fig. 6 die entsprechende Seitenansicht im verbundenen und verschraubten Zustand und Fig. 7 eine Explosionsdarstellung des Zustandes vor der entsprechenden Verbindung der beiden Stützenteile 12. Durch die Überplattung 19 und die Verschraubung 20 wird eine sehr stabile, formschlüssige Verbindung zwischen den Stützenteilen 12 erreicht, sodass insgesamt sehr lange Stützen 7 und damit Steher 3 gebaut werden können.

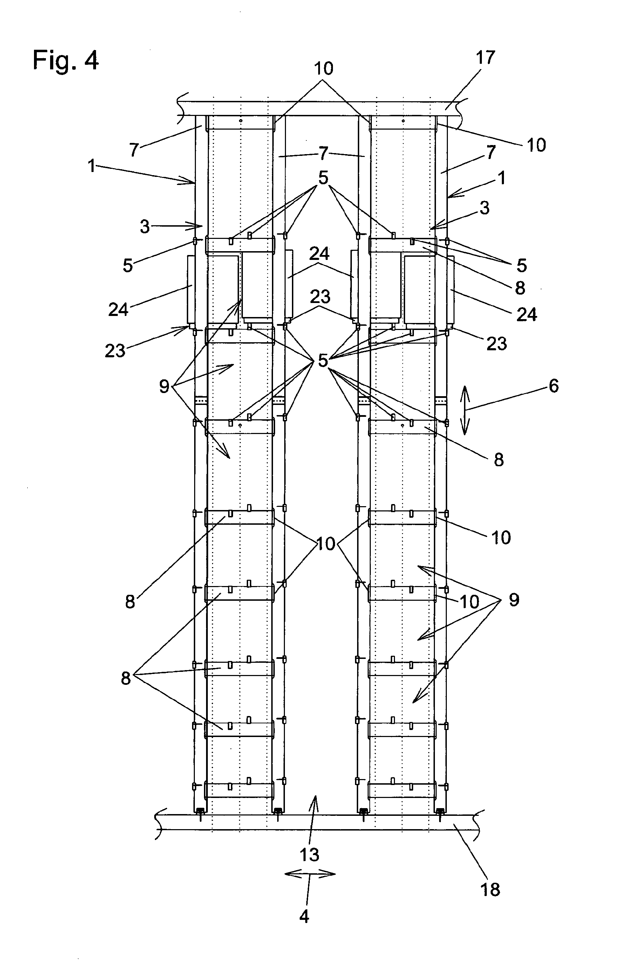

Fig. 4 zeigt zwei nebeneinander angeordnete Steher 3 zweier parallel zueinander angeordneter Hochregale 1, mit der dazwischen angeordneten Gasse 13. Mit dieser Gasse 13 ist Platz für beim Stand der Technik an sich bekannte Regalbediengeräte oder Gabelstapler geschaffen, welche dazu dienen, die oft auf Paletten 23 gelagerten Waren 24 in die entsprechenden Stellplätze des Hochregals 1 zu befördern und aus diesen wieder zu entnehmen. In Fig. 4 sind beispielhaft einige Paletten 23 mit ihren Waren 24, wie sie in den Hochregalen 1 abgestellt sind, dargestellt. Die Steher 3 bzw. Stützen 7 werden in geeigneter Art und Weise am Untergrund 18 befestigt. Hierzu können beim Stand der Technik bekannte Befestigungsarten eingesetzt werden. Die Dachträger 17 dienen als Träger für das Dach 14 und stabilisieren noch einmal die Gesamtkonstruktion. Grundsätzlich kann auf entsprechende Dachträger 17 aber auch verzichtet werden.

Fig. 8 zeigt eine Draufsicht auf einen Querträger 8 mit zwei parallel verlaufenden, auf dem Querträger 8 befestigten Längsträgern 5. Gezeigt ist in Fig. 8 die Situation an der zwei Längsträger 5 Stoß an Stoß auf dem Querträger 8 mittels Verschraubung 20 befestigt werden. Natürlich können auf den Querträgern 8 auch durchgehende Längsträger 5 entsprechend abgestützt werden. Die Längsträger 5 sind aber günstigerweise in den in Fig. 3 gezeigten Ausnehmungen 16 befestigt. Fig. 9 zeigt eine Seitenansicht auf den Querträger 8 mit darauf in den Ausnehmungen 16 mittels Verschraubung 20 befestigten Längsträgern 5.

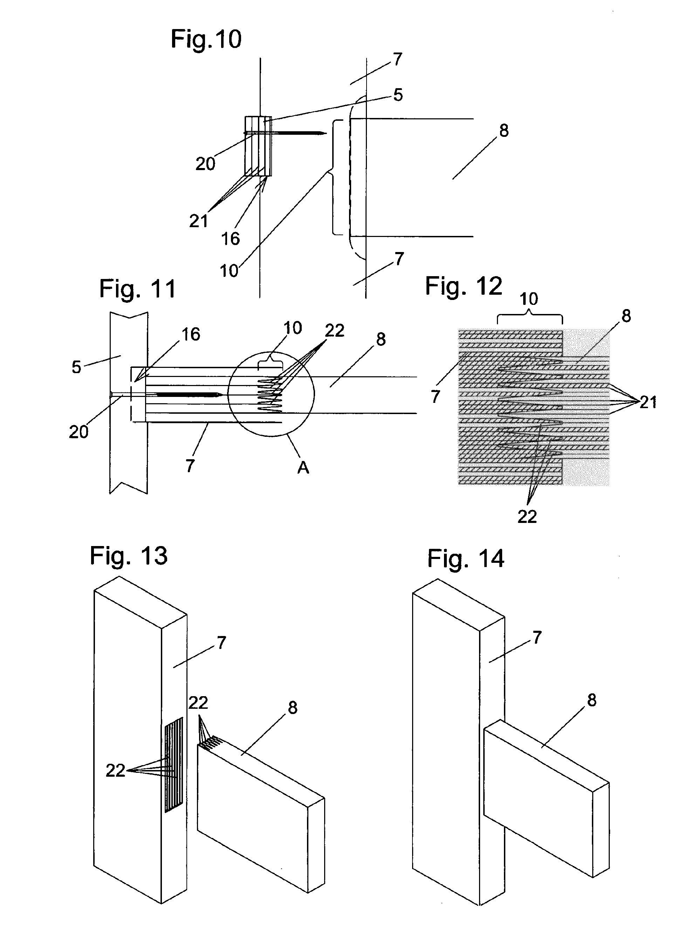

Fig. 10 zeigt einerseits, wie ein Längsträger 5 in einer Ausnehmung 16 einer Stütze 7 mittels Verschraubung 20 befestigt ist. Andererseits zeigt Fig. 10 auch die Keilzinkung 10, mittels der der Querträger 8 an dieser Stütze 7 befestigt ist.

Fig. 11 zeigt einen Horizontalschnitt in der Höhe der Verschraubung 20 durch die Situation gemäß Fig. 10. Hier sind besonders gut die Keilzinken in der Stütze 7 und die Keilzinken im Querträger 8 zu sehen, wie sie zur Ausbildung der Keilzinkung ineinander greifen, um Querträger 8 und Stütze 7 miteinander zu verbinden. Wie eingangs erläutert, ist diese Keilzinkung mit einer Verleimung oder Verklebung der Keilzinken 22 ausgeführt. Fig. 12 zeigt das Detail A aus Fig. 11 und somit ebenfalls die genannte Keilzinkung 10. Fig. 13 zeigt eine Explosionsdarstellung, also die Situation, in der der Querträger 8 noch nicht mit der Stütze 7 verbunden ist. Hier sind sowohl die Keilzinken 22 in der Stütze 7 als auch die Keilzinken 22 am Querträger 8 zu sehen. Fig. 14 zeigt den fertig miteinander verbundenen Zustand.

Wie eingangs bereits erläutert, können die Stützen 7 und/oder die Querträger 8 und/oder die Längsträger 5 aus Holz, aber auch aus einem Holzverbundwerkstoff bestehen oder dies zumindest aufweisen. Besonders bevorzugt handelt es sich um Schichthölzer oder Furnierschichthölzer, bei denen einzelne Holzschichten an ihren Grenzflächen 21 miteinander verleimt sind. Besonders hohe Festigkeiten werden durch die Verwendung von Buchenfurnierschichthölzern erreicht. Der Schichtaufbau der Stützen 7 ist in Fig. 6 angedeutet. Fig. 9 zeigt andeutungsweise den geschichteten Aufbau der Längsträger 5, ebenso wie Fig. 10. Fig. 12 zeigt detaillierter den geschichteten Aufbau sowohl der Stütze 7 als auch des Querträgers 8. Der geschichtete Aufbau ist in den genannten Figuren mittels der Grenzflächen 21 veranschaulicht, an denen die einzelnen Holzschichten miteinander verbunden, insbesondere verleimt, sind. Wie eingangs bereits erläutert, können die einzelnen Holzschichten an den Grenzflächen 21 so miteinander verbunden werden, dass die Holzfasern der verschiedenen Holzschichten alle mehr oder weniger parallel zueinander ausgerichtet sind. Es sind aber auch sogenannte Kreuz- bzw. Querverleimungen denkbar, bei denen die Fasern einzelner Holzschichten orthogonal oder in einem anderen Winkel zu den Fasern in den anderen Schichten angeordnet sind. Dies ist beispielhaft in Fig. 12 angedeutet. Hier sind die Schichten mit Fasern, welche quer zu den Fasern der anderen Schichten angeordnet sind, gestrichelt dargestellt.

### Legende zu den Hinweisziffern:

- 1: Hochregal
- 2: Hochregallager
- 3: Steher
- 4: Horizontalrichtung
- 5: Längsträger
- 6: Vertikalrichtung
- 7: Stützen
- 8: Querträger
- 9: Öffnung
- 10: Keilzinkung
- 11: Vertikalerstreckung
- 12: Stützenteil
- 13: Gasse
- 14: Dach
- 15: Außenwand
- 16: Ausnehmung
- 17: Dachträger
- 18: Untergrund
- 19: Überplattung
- 20: Verschraubung
- 21: Grenzfläche
- 22: Keilzinken
- 23: Palette
- 24: Ware

## Patentansprüche

1. Hochregal (1) für ein Hochregallager (2), insbesondere zur Lagerung einer Vielzahl von Paletten, wobei das Hochregal (1) vertikal stehende Steher (3) aus Holz und/oder Holz-Verbundwerkstoff und die Steher (3) in Horizontalrichtung (4) miteinander verbindende Längsträger (5) aufweist, **dadurch gekennzeichnet, dass** die Steher (3) jeweils zumindest zwei in Vertikalrichtung (6) verlaufende, voneinander beabstandete Stützen (7) aufweisen, wobei die den jeweiligen Steher (3) bildenden Stützen (7) mittels Querträgern (8) des jeweiligen Stehers (3) miteinander verbunden sind.

2. Hochregal (1) nach Anspruch 1, **dadurch gekennzeichnet, dass** die Stützen (7) zusammen mit den Querträgern (8) Öffnungen (9) in den Stehern (3) einschließen.

3. Hochregal (1) nach Anspruch 1 oder 2, **dadurch gekennzeichnet, dass** die Querträger (8) mittels formschlüssigem Ineinandergreifen, vorzugsweise mittels Keilzinkung (10), mit den Stützen (7) verbunden sind.

4. Hochregal (1) nach einem der Ansprüche 1 bis 3, **dadurch gekennzeichnet, dass** die Stützen und/oder Längsträger (5) und/oder die Querträger (8) aus Holz und/oder Holz-Verbundwerkstoff bestehen oder dies zumindest aufweisen.

5. Hochregal (1) nach einem der Ansprüche 1 bis 4, **dadurch gekennzeichnet, dass** die Stützen (7) und/oder die Querträger (8) und/oder die Längsträger (5) aus Buchenfurnierschichtholz bestehen oder dieses zumindest aufweisen.

6. Hochregal (1) nach einem der Ansprüche 1 bis 5, **dadurch gekennzeichnet, dass** die Steher (3), vorzugsweise die Stützen (7) der Steher (3), eine Vertikalerstreckung (11) von zumindest 12 Metern aufweisen und/oder die Stützen (7) der Steher (3) aus in Vertikalrichtung (6) übereinander angeordneten und miteinander verbundenen Stützenteilen (12), vorzugsweise mittels Überplattung (19) und Verschraubung (20), zusammengebaut sind.

7. Hochregal (1) nach einem der Ansprüche 1 bis 6, **dadurch gekennzeichnet, dass** die Längsträger (5) Ablageflächen für in dem Hochregal (1) abgestellte Paletten (23) oder sonstige Waren (24) bilden.

8. Hochregallager (2) mit einer Vielzahl von Hochregalen (1) nach einem der Ansprüche 1 bis 7.

9. Hochregallager (2) nach Anspruch 8, **dadurch gekennzeichnet, dass** zwischen den Hochregalen (1), vorzugsweise mittels Förderanlagen und/oder Gabelstapler befahrbare, Gassen (13) angeordnet sind.

10. Hochregallager (2) nach Anspruch 8 oder 9, **dadurch gekennzeichnet, dass** das Hochregallager (2) ein Gebäude ist, bei dem ein Dach (14) des Gebäudes und/oder Außenwände (15) des Gebäudes von den Hochregalen (1) des Hochregallagers (2) getragen ist bzw. sind.
